Europäisches Patentamt

European Patent Office

Office européen des brevets

(19)

(11) **EP 0 959 098 A1**

(12) **EUROPÄISCHE PATENTANMELDUNG**

(43) Veröffentlichungstag:
24.11.1999  Patentblatt 1999/47

(51) Int. Cl.⁶: **C08J 7/12**

(21) Anmeldenummer: 99108742.0

(22) Anmeldetag: 03.05.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 16.05.1998 DE 19822151

(71) Anmelder:
Mannesmann VDO Aktiengesellschaft
60388 Frankfurt am Main (DE)

(72) Erfinder: **Moser, Rainer, Dr.**
65510 Idstein (DE)

(74) Vertreter:
**Klein, Thomas, Dipl.-Ing.
Kruppstrasse 105
60388 Frankfurt (DE)**

(54) **Verfahren zur Reduzierung der Fluorwasserstoffrestgase in einem fluorierten Kunststoffbehälter**

(57) Die Erfindung betrifft ein Verfahren zur Reduzierung der Fluorwasserstoffrestgase in einem fluorierten Kunststoffbehälter, insbesondere einem Kraftstoffbehälter für ein Kraftfahrzeug, bei welchem zunächst der Behälterinnenraum einem Fluorierungsschritt unterzogen wird und anschließend in mindestens einem Gasspülprozeß die Reaktionsprodukte des Fluorierungsschrittes aus dem Kunststoffbehälter entfernt werden.

Bei einem Verfahren, bei welchem das unerwünschte Reaktionsprodukt Fluorwasserstoff vollständig eliminiert wird und welches für eine Großserie rationell geeignet ist, wird nach dem Gasspülprozeß ein Neutralisationsschritt zur Bindung von Fluorierungsrestgasen an den Innenschichten des Kunststoffbehälters durchgeführt.

EP 0 959 098 A1

Printed by Xerox (UK) Business Services
2.16.7/3.6

**Beschreibung**

Die Erfindung betrifft ein Verfahren zur Reduzierung der Fluorwasserstoffrestgase in einem fluorierten Kunststoffbehälter, insbesondere einem Kraftstoffbehälter für ein Kraftfahrzeug, bei welchem zunächst der Behälterinnenraum einem Fluorierungsschritt unterzogen wird und anschließend in mindestens einem Gasspülprozeß die Reaktionsprodukte des Fluorierungsschrittes aus dem Kunststoffbehälter entfernt werden.

Bei Kraftstofftanks wird in jüngster Zeit darauf geachtet, daß alle Möglichkeiten, unterbunden werden, bei welchem der Kraftstoff aus dem Kraftstofftank ausgast und in die Umgebung gelangt. Ein Ausgasen des Kraftstoffes ist für den Benutzer des Kraftfahrzeuges nachteilig und führt außerdem zu Umweltbelastungen.

Kunststoffkraftstoffbehälter werden zur Erreichung einer erhöhten Permeationsdichtheit für das Medium Kraftstoff tankinnenseitig fluoriert. Diese Oberflächenreaktion mit elementarem Fluor liefert als unerwünschtes Reaktionsprodukt Fluorwasserstoff.

Das überschüssige Fluorreaktionsgas und der Fluorwasserstoff werden deshalb nach dem Prozeß abgesaugt. Anschließend wird der Kunststoffbehälter zusätzlich in einem Gasspülprozeß mit trockenem Stickstoff oder trockener Luft gespült, um im Kraftstoffbehälter verbliebene Reaktionsprodukte zu entfernen.

Trotz dieser Maßnahmen verbleiben Restmengen an Fluorwasserstoff in dem Tank, was sich störend auf nachfolgend in den Tank eingebaute Systemeinheiten, wie z. B. Füllstandsgeber und Fördereinheiten auswirkt. Abhängig davon, wieviel Fluorwasserstoffrestgas in der Tankinnenatmosphäre noch enthalten ist, werden die Metalloberflächen bzw. die glasartigen Oberflächen der Füllstandsgeber und Fördereinheiten durch den verbliebenen Fluorwasserstoff mehr oder minder angeätzt. Solche Vorschädigungen führen zu Frühausfällen der im Füllstandsgeber verbauten Potentiometer und somit des gesamten Füllstandgebers.

Der Erfindung liegt somit die Aufgabe zugrunde, ein Verfahren anzugeben, bei welchem das unerwünschte Reaktionsprodukt Fluorwasserstoff vollständig eliminiert wird und welches für eine Großserie rationell geeignet ist.

Erfindungsgemäß wird die Aufgabe dadurch gelöst, daß nach dem Gasspülprozeß ein Neutralisationsschritt zur Bindung von Fluorierungsrestgasen an den Innenschichten des Kunststoffbehälters durchgeführt wird.

Der Vorteil der Erfindung besteht darin, daß durch diese einfache Maßnahme das Restgas Fluorwasserstoff unmittelbar an der Tankinnenfläche reaktiv gebunden wird und ein Ausdünsten in den Tankinnenraum unterbunden wird. Wiederholte, vielstündige Spülungen mit trockenem Stickstoff oder trockener Luft oder ein mehrtägiges Lüften des fluorierten Kunststoffbehälters können unterbleiben. Somit ist dieses Verfahren insbesondere für eine Großproduktion besonders geeignet.

Auch in Einsatzfällen, die besonders scharfen Permeationsanforderungen unterliegen (Superfluorierung) wird mittels diesem Verfahren das Ausdünsten des Restgases zuverlässig unterbunden.

In einer Ausgestaltung wird während des Neutralisierungsschrittes ein die Reaktivkomponente für Fluorwasserstoff enthaltendes Neutralisationsmittel als Flüssigkeit im Behälterinnenraum geschwenkt.

Damit wird erreicht, daß die gesamte Behälterinnenfläche von dem Neutralisationsmittel benetzt wird.

Alternativ dazu wird während des Neutralisationsschrittes das hochsiedende, die Reaktivkomponente für Fluorwasserstoff enthaltende Neutralisationsmittel im Behälterinnenraum zerstäubt.

Mit einer solchen Feinvernebelung wird im Gasraum des Kunststoffbehälters eine Absorption des Fluorwasserstoffs erreicht.

Des weiteren erfolgt durch das kondensierende Neutralisationsmittel eine weitgehende Tröpfchenbenetzung der Innenschichten des Tanks mit der Wirkstofflösung. Nachfolgend aus der Tankinnenfläche desorbierender Fluorwasserstoff wird unmittelbar an der Tankinnenfläche reaktiv gebunden und abgelagert.

Vorteilhafterweise beträgt die Reaktivkomponente anteilig 0,1 bis 50 % an dem Neutralisationsmittel.

Bei der Verwendung einer basischen Reaktivkomponente erfolgt die Bindung des Fluorwasserstoffs über eine Säure-Basen-Reaktion.

Dabei werden vorteilhafterweise säureneutralisierende Öl- oder Kraftstoffadditive oder eine organische Base, wie z. B. Amine, eingesetzt.

Die Verwendung von geruchsmildem Testbenzin oder einem Feinraffinat als Lösemittel des Neutralisationsmittels gewährleistet die Neutralität dieses Mittels gegenüber den Einbaukomponenten wie Füllstandsgeber und Fördereinheiten. Ebenfalls als Lösemittel geeignet ist Motoröl (vorzugsweise Syntheseöl) wegen seines hohen Flammpunktes.

Die Unterbindung jeglicher gesundheitsgefährdender Ausgasungen im Kraftstofftank ermöglicht gleichzeitig einen späteren Sekundäreinbau von Füllstandsgebern und Fördereinheiten.

Alternativ dazu kann während des Neutralisationsschrittes das Neutralisationsmittel als Dampf oder feiner Sprühnebel der reinen Reaktivkomponente (z.B. reines Öladditiv) in den Behälterinnenraum eingebracht werden.

In einer Weiterbildung der Erfindung wird nach dem Neutralisierungsschritt eine Restfluormessung, beispielsweise mit einem HF-Gaswarngerät, durchgeführt. Dabei wird die Tankinnenatmosphäre mittels massenspektroskopischer Selektivmethode oder einer amperometrischen Zelle auf Restfluor geprüft und festgestellt, ob die Reaktivkomponente in hinreichender Menge vorhanden ist.

Bei einer Online-Messung mittels einer massenspektroskopischen Selektivmethode wird geprüft, ob die Feinvernebelung des Neutralisationsmittels im Behälterinnenraum ausreichend war, d. h., ob der in dem Gasraum ursprünglich befindliche Fluorwasserstoff reaktiv gebunden wurde.

Die Erfindung läßt mehrere Ausführungmöglichkeiten zu. Einige sollen anhand der in der Zeichnung dargestellten Figur näher erläutert werden.

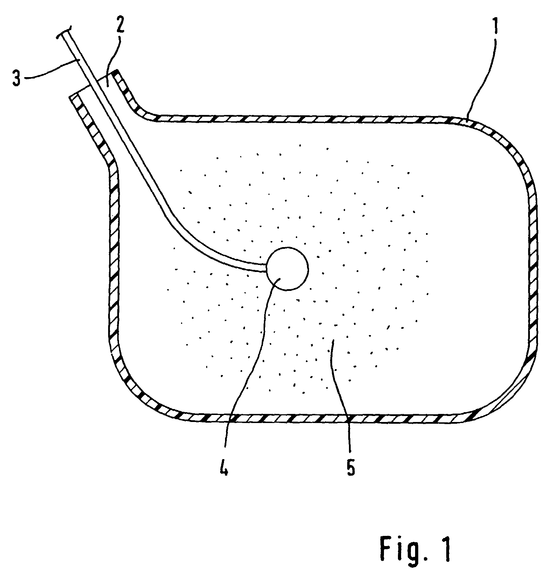

Figur 1 zeigt einen aus HD-PE (High Density Polyethylen) hergestellten Kunststoffkraftstoffbehälter 1 zur Aufnahme von Otto-Kraftstoff.

Nach der Herstellung des Kunststoffkraftstoffbehälters 1 wird zur Erreichung einer erhöhten Permeationsdichtheit für das Medium Otto-Kraftstoff der Kraftstoffbehälter 1 tankinnenseitig fluoriert, indem durch die Öffnung 2 des Behälters 1 Fluorgas, verdünnt mit Stickstoff, in den Gasraum des Kraftstoffbehälters 1 eingeführt wird. Die Oberflächenreaktion des Kunststoffes mit dem elementaren Fluor liefert als Reaktionsprodukt Fluorwasserstoff:

$$-CH_2{-}CH_2{-}CH_2\text{-} + 3F_2 \rightarrow -CF_2{-}CHF{-}CH_2\text{-} + 3\ HF \uparrow$$

Das überschüssige Reaktionsgas $F_2$ sowie der Fluorwasserstoff HF werden nach dem Fluorierungsschritt abgesaugt.

Nach dem Fluorierungsschritt und dem Absaugen wird in einem üblichen Gasspülprozeß mit trockenem Stickstoff oder trockener Luft der Kraftstofftank 1 gespült.

Anschließend wird mit Hilfe eines an einem Stab 3 in den Kraftstoffbehälter 1 eingeführten, feinzerstäubenden Drucksprühkopfes 4, wie er in Figur 1 dargestellt ist, ein hochsiedendes Lösemittel 5 in den Tankinnenraum gesprüht, das eine ausreichende Menge einer zur Bindung von Fluorwasserstoff geeigneten Reaktivkomponente enthält. Der Drucksprühkopf 4 ist dabei so ausgebildet, daß der von ihm versprühte Feinnebel gleichmäßig alle Bereiche des Tankinnenraumes erreicht. Gut geeignet ist z.B. auch eine konventionelle Lacksprühpistole ( 6-8 bar Druckluft ), womit insbesondere viskose Lösungen gut versprüht werden können.

Mit der Feinvernebelung wird eine Fluorwasserstoff-Absorption aus dem Gasraum sowie eine weitgehende Tröpfchenbenetzung der Innenoberfläche mit der Wirkstofflösung erreicht. Nachfolgend desorbierender Fluorwasserstoff wird unmittelbar an der Tankinnenfläche reaktiv gebunden, womit ein Ausdunsten in den Tankinnenraum unterbunden wird.

Als Lösemittel wird ein hochsiedendes, geruchsmildes Testbenzin oder ein Feinraffinat bevorzugt, wegen der Schwerflüchtigkeit und Flammsicherheit ist ein marktübliches synthetisches Motorenöl des Typs 5W-50 bzw. 10W-40 ebenfalls geeignet.

Gutbekannte Additionsverbindungen mit Fluorwasserstoff bildet Triethylamin ($Et_3NH^+F^-$). Aus Kostengründen wird nur eine geringe Menge von 3 bis 50 ml der Wirkstofflösung angewendet, die aber ausreichend ist die im Tank nach der Gasspülung verbleibende Fluorwasserstoff-Restmenge vollständig zu neutralisieren.

Anwendungsbeispiele:

1. Das Testbenzin (Anteil 98 Vol%) ist dabei ein aliphatisches Kohlenwasserstoffgemisch (C11 - C13) mit einem Zusatz von 2 Vol% Öladditiv mit den Wirkstoffen Polyisobutylensuccinimid und Polyamin, T.B.N - Wert = 21 (Äquivalent an mg KOH/g), bei einer Einsprühmenge von 50 - 100 ml.

2. Als weitere Zusammensetzung ist ebenfalls denkbar 99,8 % Testbenzin + 0,2 % Triethylamin. Die Einsprühmenge beträgt ebenfalls 50 - 100 ml.

3. Folgende Rezeptur ist ebenfalls geeignet: Motorsyntheseöl des Typs 5W-50 + 20 Gew.% Öladditiv mit folgendem Wirkstoff: Diphenylamin in Öl, T.B.N. - Wert = 120. Diese Rezeptur ist besonders geruchsarm. Die Einsprühmenge beträgt 3 bis 8 ml (Lacksprühpistole).

4. Auch folgende Mischung ist wirksam: Motorsyntheseöl des Typs 10W - 40 + 10 Gew. % n-Tributulamin. Dabei beträgt die Einsprühmenge 3 - 8 ml.

Reaktionsbeispiel:

$$(CH_3\ CH_2)_3\ N + HF \rightarrow (CH_3\ CH_2)_3\ NH^+\ F^-$$

Um den Erfolg der Fluorwasserstoffentfernung aus der Tankinnenatmosphäre zu prüfen, wird nach Abschluß des Neutralisierungsschrittes mittels einer massenspektroskopischen Selektivmethode oder mit einem amperometrischen HF-Sensor diese auf Restfluor untersucht. Alternativ hierzu kann mit einer Labormethode auch nur stichprobenartig die Verfahrenswirksamkeit überprüft werden (z. B. durch definiertes Absaugen von Tankatmosphäre, Absorption in einer wässerigen alkalischen Lösung, Messung mit einer fluorselektiven Elektrode bzw. mittels Ionenchromagraphie). Ebenfalls zu empfehlen ist eine Stichprobenprüfung mit Gasmeßröhrchen (Fa. Gastec, Fukaya /Japan) mit Meßbereich 0,25 - 100 ppm HF.

Mit beiden Verfahren wird erkannt, ob die Reaktivkomponente in hinreichender Menge vorhanden war bzw. es kann auch festgestellt werden, ob die Vernebelung des Lösemittels genügend gut war.

Die Anwendung des Verfahrens zeigte in allen 4 angeführten Beispielen Erfolg, d.h. die HF - Konzentration in der Tankinnenatmosphäre (typischer Bereich 10 - 50 ppm) konnte im Behälterinnenraum auf Werte von weniger als 0,2 ppm reduziert werden.

**Patentansprüche**

1. Verfahren zur Reduzierung der Fluorwasserstoffrestgase in einem fluorierten Kunststoffbehälter, insbesondere einem Kraftstoffbehälter für ein Kraftfahrzeug, bei welchem zunächst der Behälterinnenraum einem Fluorierungsschritt unterzogen wird und anschließend in mindestens einem Gasspülprozeß die Reaktionsprodukte des Fluorierungsschrittes aus dem Kunststoffbehälter entfernt werden, **dadurch gekennzeichnet,** daß nach dem Gasspülprozeß ein Neutralisierungsschritt zur Bindung von Fluorierungsrestgasen an den Innenschichten des Kunststoffbehälters durchgeführt wird.

2. Verfahren nach Anspruch 1, **dadurch gekennzeichnet,** daß während des Neutralisierungsschrittes ein die Reaktivkomponente für Fluorwasserstoff enthaltendes Neutralisationsmittel als Flüssigkeit im Behälterinnenraum geschwenkt wird.

3. Verfahren nach Anspruch 1, **dadurch gekennzeichnet,** daß während des Neutralisationsschrittes das hochsiedende, die Reaktivkomponente für Fluorwasserstoff enthaltende Neutralisationsmittel im Behälterinnenraum zerstäubt wird.

4. Verfahren nach Anspruch 2 oder 3, **dadurch gekennzeichnet,** daß die Reaktivkomponente 0,1 bis 5 % Anteil an dem Neutrisationsmittel beträgt.

5. Verfahren nach Anspruch 4, **dadurch gekennzeichnet,** daß eine basische Reaktivkomponente zur Bindung des Fluorwasserstoffs über eine Säure-Basen-Reaktion verwendet wird.

6. Verfahren nach Anspruch 5, **dadurch gekennzeichnet,** daß die Reaktivkomponente aus einem Säure neutralisierenden Öl- oder Kraftstoffadditiv oder einer organischen Base gebildet wird.

7. Verfahren nach den Ansprüchen 3 und 6 dadurch gekennzeichnet, daß als Neutralisationsmittel ein Motoröl mit Zusätzen verwendet wird.

8. Verfahren nach Anspruch 2 oder 3, **dadurch gekennzeichnet,** daß als Neutralisationsmittel ein als Lösemittel der Reaktivkomponente dienendes geruchsmildes Testbenzin oder Feinraffinat verwendet wird.

9. Verfahren nach Anspruch 1, **dadurch gekennzeichnet,** daß während des Neutralisationsschrittes das Neutralisationsmittel als Dampf oder feiner Sprühnebel der reinen Reaktivkomponente in den Behälterinnenraum eingebracht wird.

10. Verfahren nach einem der vorstehenden Ansprüche, **dadurch gekennzeichnet,** daß nach dem Neutralisationsschritt eine Restfluormessung durchgeführt wird.

11. Verfahren nach Anspruch 9, **dadurch gekennzeichnet,** daß eine Online-Messung auf Restfluorwasserstoff zur indirekten Prüfung der Feinvernebelung des Neutralisationsmittels im Behälterinnenraum durchgeführt wird.

Fig. 1

| | Europäisches Patentamt | EUROPÄISCHER RECHERCHENBERICHT | | | Nummer der Anmeldung<br>EP 99 10 8742 |
|---|---|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 816 418 A (AIR PRODUCT AND CHEMICALS, INC.) 7. Januar 1998 (1998-01-07)<br>* Ansprüche 1-5 *<br>* Beispiel 5 *<br>* Seite 4, Zeile 33 – Zeile 43 *<br>--- | 1,4,5 | C08J7/12 |
| A | US 4 994 308 A (G. TARANCON) 19. Februar 1991 (1991-02-19)<br>* Spalte 1, Zeile 7 – Zeile 10 *<br>* Spalte 4, Zeile 58 – Spalte 5, Zeile 24 *<br>----- | 1 | |

| | RECHERCHIERTE SACHGEBIETE (Int.Cl.6) |
|---|---|
| | C08J |

Der vorliegende Recherchenbericht wurde für alle Patentansprüche erstellt

| Recherchenort | Abschlußdatum der Recherche | Prüfer |
|---|---|---|
| DEN HAAG | 21. September 1999 | Hallemeesch, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 10 8742

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-09-1999

| Im Recherchenbericht angeführtes Patentdokument | Datum der Veröffentlichung | Mitglied(er) der Patentfamilie | Datum der Veröffentlichung |
|---|---|---|---|
| EP 816418 A | 07-01-1998 | US 5770135 A<br>CA 2208825 A | 23-06-1998<br>01-01-1998 |
| US 4994308 A | 19-02-1991 | CA 1326104 A<br>EP 0489197 A | 11-01-1994<br>10-06-1992 |

EPO FORM P0461

Für nähere Einzelheiten zu diesem Anhang : siehe Amtsblatt des Europäischen Patentamts, Nr. 12/82